# EUROPÄISCHE PATENTSCHRIFT

(11) **EP 3 895 383 B1**
(45) Veröffentlichungstag und Bekanntmachung des Hinweises auf die Patenterteilung: **15.10.2025**
(21) Anmeldenummer: 19812707.8
(22) Anmeldetag: 18.11.2019
(51) Int. Cl.: H04L 12/40, B60R 16/023

(54) **NETZWERKKOMMUNIKATIONSSYSTEM MIT BIDIREKTIONALER STROMMODULATION ZUR DATENÜBERTRAGUNG**
NETWORK COMMUNICATION SYSTEM WITH BIDIRECTIONAL CURRENT MODULATION FOR DATA TRANSMISSION
SYSTÈME DE COMMUNICATION DE RÉSEAU PRÉSENTANT UNE MODULATION DE COURANT BIDIRECTIONNELLE AUX FINS DE LA TRANSMISSION DE DONNÉES

(30) Priorität: 13.12.2018 DE 102018132024
(43) Veröffentlichungstag der Anmeldung: 20.10.2021
(73) Patentinhaber: Valeo Schalter und Sensoren GmbH, 74321 Bietigheim-Bissingen (DE)
(72) Erfinder: LEWANDOWSKI, Marek, 74321 Bietigheim-Bissingen (DE)
(74) Vertreter: Pothmann, Karsten
(86) Internationale Anmeldenummer: PCT/EP2019/081575
(87) Internationale Veröffentlichungsnummer: WO 2020/120071

(56) Entgegenhaltungen:
- EP-A1- 3 116 169
- DE-A1- 10 306 444
- DE-A1- 19 900 869
- DE-B3- 102012 110 732

## Beschreibung

Die Erfindung bezieht sich auf ein Netzwerkkommunikationssystem für ein Fahrzeug, umfassend einen Kommunikationsbus, ein erstes Kommunikationsgerät , und eine Mehrzahl zweiter Kommunikationsgeräte , die über den Kommunikationsbus miteinander verbunden sind gemäß den oberbegrifflichen Merkmalen des Patentanspruchs 1 , sowie ein Verfahren zur bidirektionalen, auf Strommodulation-basierten Kommunikation in einem solchen Netzwerkkommunikationssystem gemäß den oberbegrifflichen Merkmalen des Patentanspruchs 12.

**Im** Stand der Technik sind verschieden Arten von Netzwerkkommunikationssystemen bekannt. Eine Art der Netzwerkkommunikationssysteme ist ein sogenanntes 1:N Netzwerkkommunikationssystem, das einen Masternetzwerkknoten, der auch einfach als Master bezeichnet wird, und eine Mehrzahl Satellitennetzwerkknoten, die im Weiteren aus als Slaves bezeichnet werden, aufweist. Der Master kann Informationen an die Slaves übertragen und Informationen von den Slaves empfangen. Die Slaves allerdings können untereinander nicht kommunizieren. Der Master entspricht vorliegend dem ersten Kommunikationsgerät, während der Slave dem zweiten Kommunikationsgerät entspricht.

Die Informationen werden von dem Master an die Slaves und von jedem der individuellen Slaves an den Master über ein Übertragungsmedium übertragen, das eine elektrische Verbindungsleitung oder ein Kommunikationsbus ist. Die in die eine oder andere Richtung zu übertragenen Informationen werden in elektrische Signale auf der Verbindungsleitung moduliert bzw. kodiert. Der Master moduliert also Daten, die von einem oder mehreren Slaves empfangen werden, und die Slaves dekodieren die Daten. Die Slaves modulieren ebenfalls ihre zu übertragenen Daten, die wiederum von dem Master empfangen und dekodiert werden.

Durch die physikalischen Eigenschaften der Verbindungsleitungen, die für die Übertragung der Informationen verwendet werden, entsteht elektromagnetische Strahlung, sobald ein elektrischer Zustand der Verbindungsleitung anfängt sich zu ändern. Dies ist der Fall, sobald die elektrischen Signale auf die Verbindungsleitung nicht mehr konstant sind, sondern mit Daten moduliert werden.

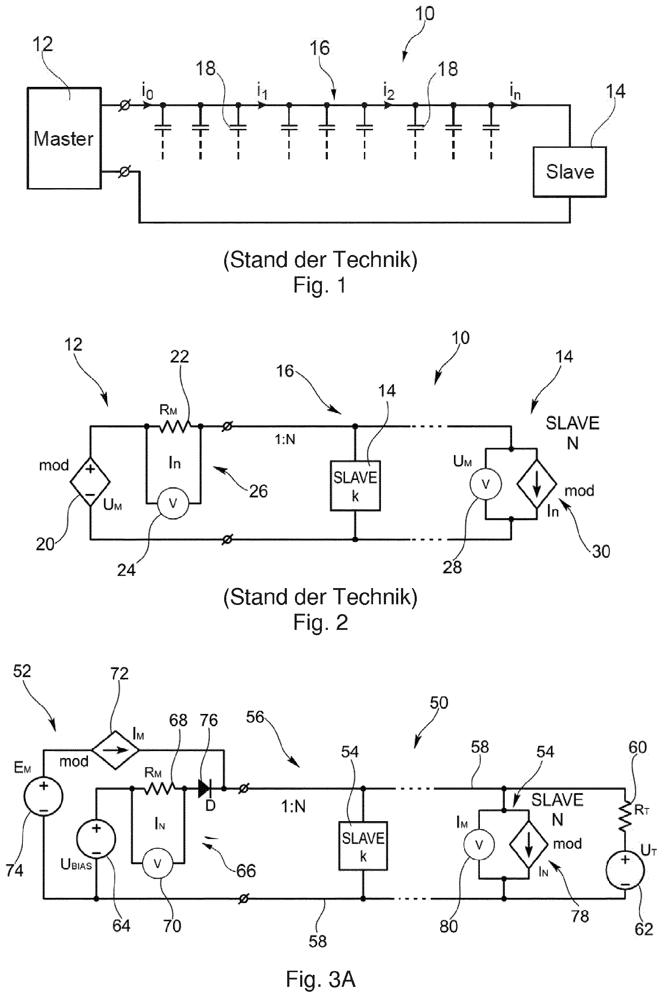

In Figur 1 ist beispielhaft ein solches Netzwerkkommunikationssystem 10 dargestellt. Das Netzwerkkommunikationssystem 10 umfasst wie oben beschrieben einen Master 12 und eine Mehrzahl Slaves 14, von denen in Figur 1 aus Gründen der Einfachheit nur ein Slave 14 dargestellt ist. Der Master 12 und der Slave 14 sind über einen Kommunikationsbus 16 elektrisch miteinander verbunden. Entlang des Kommunikationsbusses 16 ergeben sich Streukapazitäten 18, zu denen Signalströme (Wechselstrom) abfließen können, wodurch die elektromagnetische Strahlung entsteht. Entsprechend reduziert sich ein Strom von dem Master 12 zu dem Slave 14 bei jeder der Streukapazitäten um den abfließenden Anteil des Stroms, so dass ausgehend von einem Ausgangsstrom i₀ an dem Master 12 an dem Slave 14 lediglich ein Eingangsstrom iₙ empfangen wird. Zwischen verschiedenen Segmenten des Kommunikationsbus 16 ergeben sich in der Figur 1 ebenfalls gegenüber dem Ausgangsstrom i₀ an dem Master 12 reduzierte Ströme i₁ sowie i₂.

Ein Streustrom ergibt sich zu I = C * dV/dt, wobei "C" die Streukapazität ist und "V" eine Spannung auf einem entsprechenden Abschnitt der Verbindungsleitung angibt. Eine Abstrahlung der Verbindungsleitung R ist proportional zu dl/dt = C * d²V/dt², wobei "dl/dt" die erste Ableitung des Streustroms der Verbindungsleitung ist, und "d²V/dt²" die zweite Ableitung der Spannung der Verbindungsleitung ist. Die Abstrahlung R ist also proportional zu der Schnelligkeit der Busstromänderung oder proportional zu der zweiten Ableitung der Busspannung.

Um die hohen Anforderungen im Bereich automobiler EMV-Normen (elektromagnetische Verträglichkeit) sowie um die hohen Anforderungen einzelner OEM-Hersteller zu erfüllen, muss die Abstrahlung unter bestimmten Grenzwerten liegen, die in verschiedenen Frequenzbereichen definiert sind. Zur Einhaltung der Normen erfolgt meistens eine Anpassung der Datenmodulation über die Verbindungsleitung zwischen dem Master und den Slaves.

Eine Implementierung einer genauen Anpassung nach der ersten Ableitung des Stroms ist relativ einfach möglich, um die Abstrahlung zu begrenzen. Diese Anpassung kann daher einfach in Netzwerkkommunikationssystemen durchgeführt werden, in denen Daten mit Strom moduliert werden ("current shaping"). Allerdings wird basierend auf Besonderheiten von üblichen elektronischen Kreisen in 1:N Netzwerkkommunikationssystemen mit einem Master und N Slaves die Strommodulation nur in einer Richtung verwendet, nämlich in Richtung von dem jeweiligen Slave zu dem Master.

Die Datenübertragung in Richtung von dem Master zu den Slaves erfolgt üblicherweise durch eine Kodierung mit einer Spannungsmodulation, wobei die optimale Formung der Spannung basierend auf einer Anpassung nach der zweiten Ableitung der Spannung wesentlich komplexer ist als die Anpassung nach der ersten Ableitung des Stroms. Darüber hinaus gelten die oben zitierten Gleichungen nur für lineare elektronische Kreise. Im Falle wenn der Kommunikationsbus auch nicht-lineare Impedanzen aufweist - z.B. der Bus ist nicht nur für Kommunikation verwendet - wird eine genaue Anpassung nach zweiter Ableitung der Busspannung sehr erschwert wenn überhaupt möglich. In der Praxis erfolgt daher keine so exakte Anpassung der Modulation der Busspannung, stattdessen wird die Datenübertragung meist verlangsamt. Daher ist eine erzielbare Datenübertragungsrate von dem Master zu den Slaves oftmals um ein Mehrfaches geringer als die Datenübertragungsrate von dem jeweiligen Slave zu dem Master.

Ein solches Netzwerkkommunikationssystem 10 ist im Detail in Figur 2 dargestellt. Wie zuvor unter Bezug auf Figur 1 ausgeführt wurde, sind hier ein Master 12 mit einer Mehrzahl Slaves 14 über einen Kommunikationsbus 16 verbunden.

Das erste Kommunikationsgerät 12 umfasst eine modulierbare Spannungsquelle 20 mit der die vom ersten Kommunikationsgerät 12 zu sendenden Daten in Spannung moduliert und auf den Kommunikationsbus 16 geleitet werden. Die modulierte Spannung kann weiter in allen an den Kommunikationsbus 16 angeschlossenen Slaves 14 mit einer Spannungsmessvorrichtung 28 erfasst werden. Somit die vom Master 12 gesandten Daten jeweils in jedem Slave 14 dekodiert werden können.

Jeder der jeweiligen Slaves 14 umfasst außerdem eine modulierbare Stromsenke 30, mit der die vom Slave 14 zusendenden Daten in Strom moduliert werden, der über den Kommunikationsbus 16 von der im Master 12 vorhandenen Spannungsquelle 20 über eine Strommessvorrichtung 26 gezogen wird. Der modulierte Strom wird mit der Strommessvorrichtung 26 erfasst. Somit können die vom jeweiligen Slave 14 gesandten Daten im Master 12 dekodiert werden. So aufgebaute Kommunikationsnetze 10 können sehr kostengünstig realisiert werden.

In diesem Zusammenhang ist aus der WO 03/053018 A1 ein Verfahren zum auf einem Kommunikationspfad vorgesehenen bidirektionalen Übertragen von in Form von Signalen vorliegenden Daten zwischen mindestens zwei jeweils mindestens eine schaltbare Verbrauchereinheit, jeweils mindestens eine schaltbare Stromquelleneinheit, die der Verbrauchereinheit zugeordnet wird, und jeweils mindestens eine Komparatoreinheit, die der Verbrauchereinheit zugeordnet wird, aufweisenden Kommunikationsteilnehmern, denen beim Übertragen der Daten zumindest temporär die Funktion eines Senders bzw. zumindest temporär die Funktion eines Empfängers zugeordnet wird, indem vor dem Übertragen der Signale die Verbrauchereinheit des Senders abgeschaltet wird, zum Erzeugen der über den Kommunikationspfad zu übertragenden Signale die Stromquelleneinheit des Senders entsprechend getaktet wird, die auf diese Weise erzeugten Signale über den Kommunikationspfad übertragen werden, so dass an der dem Empfänger zugeordneten Komparatoreinheit entsprechende Ausgangssignale entstehen, und nach dem Übertragen die Verbrauchereinheit des Senders wieder eingeschaltet wird.

Aus der EP 1 371 045 B1 ist eine Vorrichtung zur Datenübertragung zwischen Fahrzeugsensoren und einem Steuergerät bekannt, wobei die Datenübertragung asynchron mit einem ersten Datentelegramm von einem jeweiligen Fahrzeugsensor zu dem Steuergerät erfolgt. Das Steuergerät weist einen Schnittstellenbaustein auf, der das erste Datentelegramm mit Sensordaten von dem jeweiligen Fahrzeugsensor decodiert und in ein zweites Datentelegramm umformatiert. Der Schnittstellenbaustein überträgt das zweite Datentelegramm synchron zu dem Prozessor des Steuergeräts, wobei der Schnittstellenbaustein einen Speicher zur Zwischenspeicherung der Sensordaten aufweist. Das zweite Datentelegramm weist ein Altersbit zur Auswahl der Sensordaten des jeweiligen Fahrzeugsensors auf, wobei der Speicher ein erstes Datenfeld für alte Sensordaten und ein zweites Datenfeld für neue Sensordaten für jeden Fahrzeugsensor aufweist und der Prozessor das Altersbit setzt.

Die US 9,325,245 B2 betrifft einen bidirektional isolierten DC/DC-Wandler, der zwei Anschlüsse, zwei spannungs- und stromisolierte Erfassungseinheiten, ein Verarbeitungsmodul, zwei Filterschaltungseinheiten und ein bidirektionales Stromumwandlungsmodul umfasst. Einer der zwei Ports wird selektiv als ein Eingangsanschluss des bidirektional isolierten DC-DC-Wandlers verwendet, und ein anderer der zwei Ports wird als ein Ausgangsanschluss verwendet. Die zwei spannungs- und stromisolierten Erfassungseinheiten sind jeweils mit den zwei Anschlüssen verbunden, um Spannungen und Ströme an den zwei Anschlüssen abzutasten und entsprechende Rückkopplungssignale zu erzeugen. Das Verarbeitungsmodul empfängt die Rückkopplungssignale und gibt entsprechende Steuersignale entsprechend den Rückkopplungssignalen aus. Das bidirektionale leistungsumsetzende Modul ist über die zwei spannungs- und stromisolierten Erfassungseinheiten mit den zwei Anschlüssen verbunden, um die Umwandlung verschiedener Spannungen zwischen den zwei Anschlüssen entsprechend den Steuersignalen, die von dem Verarbeitungsmodul ausgegeben werden, durchzuführen.

Aus der US 9,496,969 B1 ist ein Pulswellenformer zum Reduzieren des Strahlungsemissionspegels bekannt. Der Pulswellenformer umfasst einen ersten Integrator, wobei der erste Integrator eine erste Pulswelle empfängt und eine zweite Pulswelle erzeugt und ein zweiter Integrator mit dem ersten Integrator gekoppelt ist, wobei der zweite Integrator die zweite Pulswelle empfängt und eine dritte Pulswelle erzeugt mit einer Pulswellenamplitude. Die erste Pulswelle umfasst eine erste Pulswellenform, die zweite Pulswelle umfasst eine zweite Pulswellenform und die dritte Pulswelle umfasst eine dritte Pulswellenform. Die dritte Pulswellenform erzeugt, wenn sie über einen Bus übertragen wird, einen verringerten Strahlungsemissionspegel.

Aus der DE 103 06 444 A1 ist ein 2-Leitungs-Bussystem mit Spannungsmodulation zur Übertragung von Daten seitens einer Haupteinrichtung und Strommodulation zur Übertragung von Daten seitens einer Nebeneinrichtung sowie ein Verfahren zum Betreiben eines solchen Bussystems bekannt Ausgehend von dem oben genannten Stand der Technik liegt der Erfindung somit die Aufgabe zugrunde, ein Netzwerkkommunikationssystem und ein Verfahren der oben genannten Art anzugeben, die eine schnelle und effiziente Kommunikation in Übertragungsrichtung sowohl von dem Master zu den Slaves wie auch von jedem der Slaves zu dem Master zu ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Netzwerkkommunikationssystem angegeben, insbesondere für ein Fahrzeug, mit einem Kommunikationsbus, einem ersten Kommunikationsgerät und einer Mehrzahl zweiter Kommunikationsgeräte, die über den Kommunikationsbus miteinander verbunden sind, wobei das erste Kommunikationsgerät eine Vorspannungsquelle umfasst zur Erzeugung einer konstanten Vorspannung auf dem Kommunikationsbus, das erste Kommunikationsgerät eine Strommessvorrichtung zur Erfassung des Stroms auf dem Kommunikationsbus umfasst, das Netzwerkkommunikationssystem einen Abschlusswiderstand aufweist, der parallel zu der Mehrzahl zweiter Kommunikationsgeräte angeordnet ist, das erste Kommunikationsgerät eine erste Modulationsvorrichtung zur Modulation eines durch die Vorspannung und den Abschlusswiderstand eingestellten Stroms auf dem Kommunikationsbus umfasst, jedes zweite Kommunikationsgerät eine zweite Modulationsvorrichtung zur Modulation des durch die Vorspannung und den Abschlusswiderstand eingestellten Stroms umfasst, und jedes zweite Kommunikationsgerät eine zweite Spannungsmessvorrichtung zur Erfassung einer Spannung an dem Abschlusswiderstand aufweist.

Erfindungsgemäß ist außerdem ein Verfahren zur bidirektionalen, auf Strommodulation-basierten Kommunikation in einem Netzwerkkommunikationssystem angegeben, insbesondere für ein Fahrzeug, mit einem Kommunikationsbus, einem ersten Kommunikationsgerät, einer Mehrzahl zweiter Kommunikationsgeräte, die über den Kommunikationsbus miteinander verbunden sind, und einem Abschlusswiderstand, der parallel zu der Mehrzahl zweiter Kommunikationsgeräte angeordnet ist, umfassend die Schritte Erzeugen einer konstanten Vorspannung auf dem Kommunikationsbus mit dem ersten Kommunikationsgerät, Erzeugen eines modulierten Stroms auf dem Kommunikationsbus mit dem ersten Kommunikationsgerät, Erfassen der an dem Abschlusswiderstand durch den mit dem ersten Kommunikationsgerät modulierten Strom verursachten Spannung mit jedem der zweiten Kommunikationsgeräte, Erzeugen eines modulierten Stroms auf dem Kommunikationsbus mit einem der zweiten Kommunikationsgeräte, und Erfassen des mit einem der zweiten Kommunikationsgeräte modulierten Stroms auf dem Kommunikationsbus mit dem ersten Kommunikationsgerät.

Grundidee der vorliegenden Erfindung ist es also, bei einer Kommunikation zwischen einem ersten Kommunikationsgerät, im Weiteren auch Master genannt, und einer Mehrzahl zweiter Kommunikationsgeräte, im Weiteren auch Slaves genannt, bidirektional eine Strommodulation zur Modulierung der zu übertragenen Daten zu verwenden. Dies hat den Vorteil, dass die üblicherweise erzielbare, bei Spannungsmodulation langsamere Datenübertragungsrate in Richtung vom Master zu Slaves, bei Strommodulation erhöht werden kann. Die Strommodulation ermöglicht eine direkte Anpassung des Stroms, wodurch Anforderungen an die elektromagnetische Verträglichkeit (EMV) des Netzwerkkommunikationssystems einfacher erfüllt werden können. Da eine elektromagnetische Abstrahlung proportional zu der ersten Ableitung des Stroms ist, also zu der Stromänderung, kann die Modulation so durchgeführt werden, dass die Abstrahlung auf ein erforderliches oder gewünschtes Maß reduziert werden kann. Die einfache Kontrolle der Abstrahlung wiederum ermöglicht es, dass die Kommunikation zwischen dem Master und den Slaves gegenüber einer Kommunikation basierend auf einer Spannungsmodulation verbessert und beschleunigt werden. Beschränkungen der Datenübertragungsrate bei einer Spannungsmodulation, die im Stand der Technik durchgeführt werden, um bei der Spannungsmodulation die Abstrahlung zu begrenzen, sind nicht erforderlich.

Der Kommunikationsbus ist typischerweise mit zwei elektrischen Leitungen ausgeführt, wobei eine der Leitungen mit Masse verbunden sein kann. Das erste und die zweiten Kommunikationsgeräte sind dabei parallel mit den beiden Leitungen verbunden.

Die von der Vorspannungsquelle erzeugte konstante Vorspannung ermöglicht eine Erzeugung eines konstanten Ruhestroms auf dem Kommunikationsbus, auf dem sowohl von dem ersten Kommunikationsgerät wie auch von jedem der zweiten Kommunikationsgeräte Daten moduliert werden. Die Modulation erfolgt dabei durch die erste bzw. die jeweilige zweite Modulationseinrichtung ausgehend von dem Ruhestrom. Dabei können insbesondere die zweiten Kommunikationsgeräte ihre Strommodulation ausgehend von dem Ruhestrom beispielsweise durch eine Ableitung des Stroms durchführen, so dass sie nicht zwangsläufig eine eigene Stromquelle benötigen.

Um die von dem ersten Kommunikationsgerät durchgeführte Modulation des Stroms auf dem Kommunikationsbus zu erfassen, wird der Strom auf dem Kommunikationsbus von den zweiten Kommunikationsgeräten über eine Veränderung der an dem Abschlusswiderstand abfallenden Spannung bestimmt. Entsprechend kann die Strommodulation durch das erste Kommunikationsgerät von dem jeweiligen zweiten Kommunikationsgerät erfasst werden, um die von dem ersten Kommunikationsgerät modulierten Daten zu dekodieren. Eine direkte Strommessung durch die zweiten Kommunikationsgeräte wäre schwierig, da die zweiten Kommunikationsgeräte parallel an den Kommunikationsbus angeschlossen sind. Allerdings kann jedes zweite Kommunikationsgerät die Spannung an dem Abschlusswiderstand parallel messen, woraus sich eine Stromänderung ergibt. Unter Kenntnis des Abschlusswiderstands kann der Strom auf dem Kommunikationsbus ermittelt werden. Prinzipiell ist es nicht erforderlich, die exakten Werte für die Modulation des Stroms zu ermitteln. Erhöhte bzw. reduzierte Pegel können beispielsweise einzelne digitale Zustände kodieren, ohne dass der Strom der Modulation exakt zu bestimmen ist.

Die Datenübertragung von dem ersten Kommunikationsgerät zu einem der zweiten Kommunikationsgeräte und von jedem der zweiten Kommunikationsgeräte zu dem ersten Kommunikationsgerät erfolgt jeweils unabhängig und in prinzipiell beliebiger zeitlicher Abfolge. Es ist lediglich zu vermeiden, dass zwei der Kommunikationsgeräte gleichzeitig eine Übertragung von Daten durchführen wollen.

Erfindungsgemäß weist die Strommessvorrichtung einen Messwiderstand, durch den der von dem zweiten Kommunikationsgerät modulierte Strom fließt, und eine erste Spannungsmessvorrichtung zur Erfassung eines Spannungsabfalls an dem Messwiderstand auf. Der Messwiderstand ist beispielsweise als Shunt mit einem kleinen Widerstandswert von einem Ohm oder weniger ausgeführt. Durch einen solchen Shunt wird der Strom auf dem Kommunikationsbus nur in geringem Maße beeinflusst. Die Spannungsmessung über dem Shunt kann sehr einfach und zuverlässig durchgeführt werden.

In einer alternativen Ausgestaltung der Erfindung kann die Strommessvorrichtung einen Stromspiegel, durch den der von dem zweiten Kommunikationsgerät modulierte Strom fließt, und einen Strommessers aufweisen. Der Strommesser kann so insbesondere den Strom auf dem Kommunikationsbus bzw. Busstrom messen, und zwar unter Verwendung des Stromspiegels. Durch die Verwendung des Stromspiegels hat die Strommessung keine Auswirkung auf die restliche Schaltung.

Erfindungsgemäß sind die die Vorspannungsquelle und die erste Modulationsvorrichtung parallel in dem ersten Kommunikationsgerät angeordnet, und der Vorspannungsquelle ist eine Diode vorgeschaltet, die einen Strom aus der ersten Modulationsvorrichtung in die Vorspannungsquelle blockiert. Somit verhindert die Diode, dass der modulierte Strom durch die Vorspannungsquelle geglättet oder sogar vollständig absorbiert wird. Der Ruhestrom und der modulierte Strom addieren sich zu einem Gesamtstrom, in dem die übertragenen Daten moduliert enthalten sind.

Erfindungsgemäß sind die Vorspannungsquelle und die Strommessvorrichtung in Reihe geschaltet. Somit kann das erste Kommunikationsgerät einen einfachen Aufbau aufweisen. Die Vorspannungsquelle kann in Kombination mit einem Widerstand, beispielsweise dem Abschlusswiderstand, den Ruhestrom auf dem Kommunikationsbus bereitstellen. Dabei kann der Strom die Spannungsquelle und damit auch die Strommesseinrichtung durchfließen.

In vorteilhafter Ausgestaltung der Erfindung ist die Vorspannungsquelle als Konstantspannungsquelle ausgeführt. Die Konstantspannungsquelle wird also nicht zur Modulation der Daten auf dem Kommunikationsbus verwendet. Der Ruhestrom kann durch die Wahl der Konstantspannungsquelle in Kombination mit dem Abschlusswiderstand eingestellt werden.

Erfindungsgemäß ist die erste Modulationseinrichtung in Reihe mit einer ersten Spannungsquelle geschaltet. Die erste Spannungsquelle bewirkt eine Voreinstellung der ersten Modulationseinrichtung. Es wird eine schaltungstechnische Anpassung durchgeführt, um die Funktion der ersten Modulationseinrichtung zu gewährleisten.

Erfindungsgemäß sind die erste Modulationsvorrichtung und/oder die zweite Modulationsvorrichtung zur analogen Modulation des Ruhestroms ausgeführt. Die Strommodulation erfolgt also in Übereinstimmung mit einem zu übertragenen analogen Signal, so dass der Ruhestrom darauf basierend moduliert wird.

Erfindungsgemäß ist die erste Modulationsvorrichtung und/oder die zweite Modulationsvorrichtung zur digitalen Modulation des Stroms ausgeführt, vorzugsweise mit einer Mehrzahl unterschiedlicher Modulationsstrompegel. Beispielsweise kann bei einer Implementierung des ersten Kommunikationsgeräts die erste Modulationsvorrichtung ausgeführt sein, bei ihrer Datenübertragung bei einem dominanten Datenpegel einen Strom zu treiben, d.h. in den Kommunikationsbus einzuspeisen, und bei einem passiven Datenpegel einen Strom zu blockieren, d.h. der Ruhestrom wird nicht verändert. Dadurch erscheinen die modulierten Daten auf dem Kommunikationsbus oberhalb des Ruhestroms und damit durch eine Spannung an dem Abschlusswiderstand, die größer ist als die Spannung der Konstantspannungsquelle. Bei einer Verwendung von mehreren Modulationsstrompegeln können entsprechend mehr Daten gegenüber einer binären Datenübertragung übertragen werden.

Erfindungsgemäß ist der Abschlusswiderstand in dem ersten Kommunikationsgerät angeordnet. Eine separate Anordnung des Abschlusswiderstands an dem Kommunikationsbus ist nicht erforderlich, wodurch das Netzwerkkommunikationssystem insgesamt vereinfacht wird. Die Anordnung des Buswiderstands in dem ersten Kommunikationsgerät ermöglicht es, dass alle zweiten Kommunikationsgeräte den gleichen Aufbau aufweisen können. Dies erleichtert Aufbau und Wartung des Netzwerkkommunikationssystems.

Erfindungsgemäß ist der Abschlusswiderstand in einem der zweiten Kommunikationsgeräte angeordnet. Eine separate Anordnung des Abschlusswiderstands an dem Kommunikationsbus ist nicht erforderlich, wodurch das Netzwerkkommunikationssystem insgesamt vereinfacht wird.

Erfindungsgemäß ist der Abschlusswiderstand direkt an dem Kommunikationsbus angeordnet. Dies ermöglicht eine Bereitstellung der ersten und zweiten Kommunikationsgeräte ohne Notwendigkeit eines Abschlusswiderstands. So können alle ersten bzw. zweiten Kommunikationsgeräte jeweils gleichartig hergestellt werden.

Die zweite Modulationseinrichtung ist vorzugsweise als Stromsenke ausgeführt.

Basierend auf dem voreingestellten Ruhestrom auf dem Kommunikationsbus durch das erste Kommunikationsgerät wird die Modulation entsprechend durch eine Absenkung des Ruhestroms durch die Stromsenke durchgeführt. Entsprechend fließt ein geringerer Teil des von dem ersten Kommunikationsgerät eingestellten Ruhestroms durch den Abschlusswiderstand, so dass die daran anliegende Spannung entsprechend fällt. Die Ausführung der zweiten Kommunikationsgeräte mit jeweils einer Stromsenke ist einfach möglich, da keine aktive Bereitstellung von Strom erforderlich ist. Bei der Verwendung von Stromsenken ist es erforderlich, dass alle Stromsenken bei Nichtverwendung, d.h. während sie selber keine Daten auf den Ruhestrom auf dem Kommunikationsbus modulieren, blockieren, um ungewollte Schwankungen des Stroms durch den Abschlusswiderstand zu verhindern.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Ansicht eines Kommunikationsnetzes aus dem Stand der Technik mit einem Master und einem Slave, die über eine Verbindungsleitung miteinander verbunden sind, wobei die Verbindungsleitung Streukapazitäten aufweist,
- Fig. 2: eine konkrete Ausgestaltung des Kommunikationsnetzes aus Fig. 1, wobei der Master eine modulierbare Spannungsquelle und jeder Slave eine modulierbare Stromsenke aufweist,
- Fig. 3A: eine schematische Darstellung eines Netzwerkkommunikationssystems gemäß einer ersten, bevorzugten Ausführungsform mit einem ersten Kommunikationsgerät, einer Mehrzahl zweiter Kommunikationsgeräte und einem Abschlusswiderstand, die parallel mit einem Kommunikationsbus verbunden sind,
- Fig. 3B: eine schematische Darstellung eines Netzwerkkommunikationssystems gemäß einer zweiten, alternativen Ausführungsform mit einer auf Stromspiegel basierten Strommessvorrichtung,
- Fig. 4: ein beispielhaftes Zeitdiagramm mit einer Datenübertragung zwischen dem ersten und einem zweiten Kommunikationsgerät mit einem Spannungsverlauf an dem Abschlusswiderstand bei Verwendung einer binären, digitalen Modulation, und
- Fig. 5: ein beispielhaftes Zeitdiagramm mit einer Datenübertragung zwischen dem ersten und einem zweiten Kommunikationsgerät mit einem Spannungsverlauf an dem Abschlusswiderstand bei Verwendung einer digitalen Modulation mit drei Unterschiedlichen Signalpegeln.

Die Figur 3A zeigt ein Netzwerkkommunikationssystem 50 gemäß einer ersten, bevorzugten Ausführungsform.

Das Netzwerkkommunikationssystem 50 der ersten Ausführungsform umfasst ein erstes Kommunikationsgerät 52, eine Mehrzahl zweiter Kommunikationsgeräte 54 und einen Kommunikationsbus 56, über den das erste Kommunikationsgerät 52 und die Mehrzahl zweiter Kommunikationsgeräte 54 miteinander verbunden sind. Der Kommunikationsbus 56 ist mit zwei elektrischen Leitungen 58 ausgeführt.

Der Kommunikationsbus 56 weist außerdem einen Abschlusswiderstand 60 auf, der parallel zu den Kommunikationsgeräten 52, 54 mit dem Kommunikationsbus 56 verbunden. In einer alternativen Ausführung kann der Abschlusswiderstand 60 in Reihe mit einer konstanten Abschlussspannungsquelle 62 angeordnet werden, sodass der Wert des Abschlusswiderstands 60 klein gehalten werden kann.

Das erste Kommunikationsgerät 52 umfasst eine Vorspannungsquelle 64 zur Erzeugung einer konstanten Vorspannung auf dem Kommunikationsbus 56. Die konstante Vorspannung erzeugt einen Ruhestrom durch den Abschlusswiderstand 60. Die Vorspannungsquelle 64 ist hier als Konstantspannungsquelle 64 ausgeführt.

Jedes der zweiten Kommunikationsgeräte 54 umfasst eine zweite Modulationsvorrichtung 78 zur Modulation eines Senkestroms auf dem Kommunikationsbus 56 und eine zweite Spannungsmessvorrichtung 80 zur Messung einer Spannung an dem Abschlusswiderstand 60. Durch die Messung der Spannung an dem Abschlusswiderstand 60 mit der zweiten Spannungsmessvorrichtung 80 kann jedes zweite Kommunikationsgerät 54 unter Kenntnis des Abschlusswiderstands 60 den Gesamtstrom auf dem Kommunikationsbus 56 ermitteln.

Das erste Kommunikationsgerät 52 umfasst eine Strommessvorrichtung 66, die mit der Vorspannungsquelle 64 in Reihe geschaltet ist. In dieser Ausführungsform der Fig. 3A umfasst die Strommessvorrichtung 66 einen Messwiderstand 68, durch den der Ruhestrom zusammen mit dem von der Stromsenke 78 des jeweiligen zweiten Kommunikationsgeräts 54 modulierten Strom fließt. Dieser Strom entspricht einem Strom auf dem Kommunikationsbus 56. Das erste Kommunikationsgerät 52 bzw. die Strommessvorrichtung 66 umfasst weiterhin eine erste Spannungsmessvorrichtung 70 zur Messung eines Spannungsabfalls an dem Messwiderstand 68. Unter Kenntnis des Messwiderstandswertes 68 lässt sich der Wert des modulierten Stroms auf dem Kommunikationsbus 56 zu ermitteln.

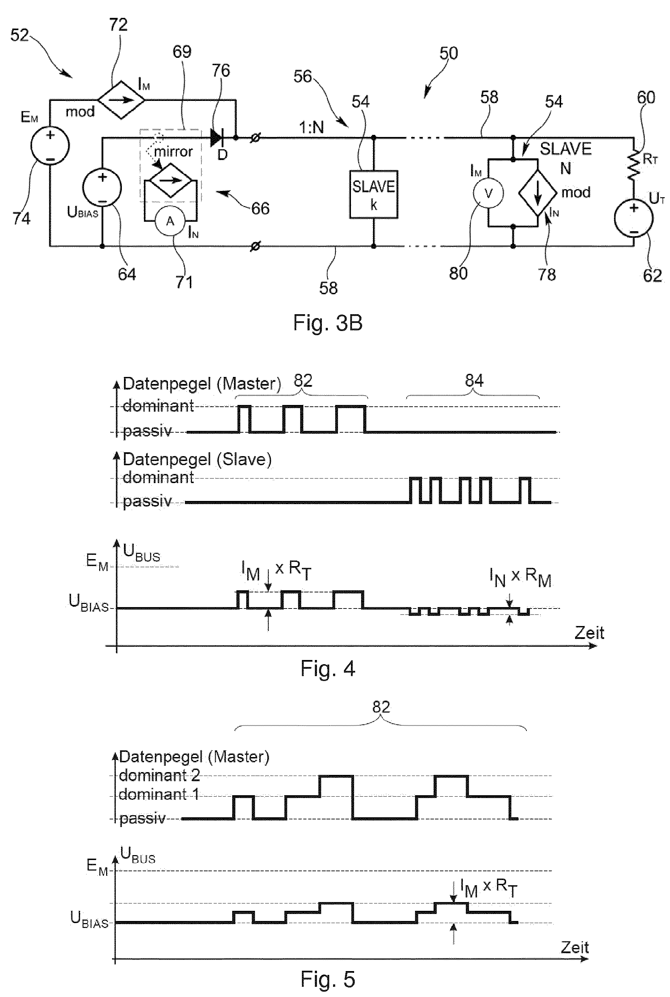

In einer alternativen Ausführungsform kann die Strommessvorrichtung 66 auch mit anderen Mitteln - ohne den Messwiderstand 68 und Spannungsmessvorrichtung 70 - realisiert werden. Beispielsweise kann in einer zweiten, alternativen Ausführungsform die Strommessvorrichtung 66 mittels eines Stromspiegels 69 und eines Strommessers 71 realisiert werden, wie es symbolisch in Figur 3B gezeigt wird. Die Strommessvorrichtung 66 umfasst also einen Stromspiegel 69, durch den der Ruhestrom zusammen mit dem von der Stromsenke 78 des jeweiligen zweiten Kommunikationsgeräts 54 modulierten Strom fließt. Dieser Strom entspricht auch hier einem Strom auf dem Kommunikationsbus 56 bzw. Bussstrom. Das erste Kommunikationsgerät 52 bzw. die Strommessvorrichtung 66 umfasst weiterhin einen Strommesser 71 zur Messung des Stroms auf dem Kommunikationsbus über den Stromspiegel. Durch die Verwendung des Stromspiegels hat die Strommessung keine Auswirkung auf die restliche Schaltung.

Die folgende Beschreibung bezieht sich sowohl auf die Ausführungsform der Figur 3A als auch auf die Ausführungsform der Figur 3B. Parallel zu der Vorspannungsquelle 64 und der Strommessvorrichtung 66 ist eine erste Modulationsvorrichtung 72 in Reihe mit einer ersten Versorgungspannungsquelle 74 angeordnet. Die erste Modulationsvorrichtung 72 ist vorliegend als modulierbare Stromquelle ausgeführt. Die erste Versorgungspannungsquelle 74 ermöglicht, dass die modulierbare Stromquelle 72 einen modulierten Strom als Zusatz zu dem konstanten Ruhestrom in den Kommunikationsbus 56 einfließen lassen kann.

In diesem Zusammenhang ist in der Reihenschaltung aus der Vorspannungsquelle 64 und der Strommessvorrichtung 66 eine Diode 76 vorgeschaltet, die einen Strom aus der ersten Modulationsvorrichtung 72 in die Vorspannungsquelle 64 blockiert. Die Diode 76 stellt es somit sicher, dass der von der ersten Modulationsvorrichtung 72 modulierte Strom lediglich in den Kommunikationsbus 56 fließt und nicht durch die Vorspannungsquelle 64 geglättet oder sogar vollständig absorbiert wird. Der Ruhestrom und der modulierte Strom addieren sich zu einem Gesamtstrom (Busstrom), der die übertragenen Daten enthält.

Im Betrieb wird in dem Netzwerkkommunikationssystem 50 zunächst von der Vorspannungsquelle 64 ein konstanter Ruhestrom auf dem Kommunikationsbus 56 von dem ersten Kommunikationsgerät 52 erzeugt. Sowohl die erste Modulationsvorrichtung 72 des ersten Kommunikationsgerätes 52 als auch alle zweiten Kommunikationsgeräte 54 sind nicht aktiv, d.h. es werden keine Ströme im Zusatz zu dem Ruhestrom auf dem Kommunikationsbus 56 generiert bzw. gezogen. Davon ausgehend können sowohl von dem ersten Kommunikationsgerät 52 wie auch von jedem der zweiten Kommunikationsgeräte 54 zeitlich versetzt Daten per Strommodulation moduliert werden, wie nachstehend im Detail ausgeführt ist.

Wenn das erste Kommunikationsgerät 52 Daten an eines bzw. an mehrere der zweiten Kommunikationsgeräte 54 übertragen will, moduliert das erste Kommunikationsgerät 52 mit der ersten Modulationsvorrichtung 72 seine Daten in modulierten Strom und lässt seinen modulierten Strom als Zusatz zu dem konstanten Ruhestrom in den Kommunikationsbus 56 fließen. Die zweiten Modulationsvorrichtungen 78 der zweiten Kommunikationsgeräte 54 bleiben nicht aktiv. Dadurch fließt der über den Kommunikationsbus 56 fließende Strom, d.h. der Ruhestrom zusammen mit dem von der ersten Modulationsvorrichtung 72 modulierten Strom, vollständig durch den Abschlusswiderstand 60. Der von der ersten Modulationsvorrichtung 72 modulierte Strom bewirkt dabei gegenüber dem Ruhestrom einen zusätzlichen Spannungsabfall an dem Abschlusswiderstand 60. Die zweiten Kommunikationsgeräte 54 messen die Spannung an dem Abschlusswiderstand 60 mit ihrer jeweiligen zweiten Spannungsmessvorrichtung 80, um somit die modulierten Daten dekodieren zu können. Entsprechend können die von dem ersten Kommunikationsgerät 52 modulierten Daten in jedem der zweiten Kommunikationsgeräte 54 dekodiert werden

Entsprechend können die zweiten Kommunikationsgeräte 54 jeweils einen modulierten Strom von dem Kommunikationsbus 56 mit der entsprechenden zweiten Modulationsvorrichtung 78 ziehen, um Daten an das erste Kommunikationsgerät 52 zu übertragen. Dies wird von der Vorspannung und dem daraus resultierenden Ruhestrom ermöglicht, so dass die zweite Modulationsvorrichtung 78 eines jeden zweiten Kommunikationsgerät 54 einen modulierten Senkestrom ziehen kann, der den aus der Vorspannungsquelle 64 fließenden Ruhestrom entsprechend erhöht.

Der von der jeweiligen zweiten Modulationsvorrichtung 78 gezogene modulierte Senkestrom verursacht an dem Messwiderstand 68 eine Änderung des Spannungsabfalls, die den von einem der zweiten Kommunikationsgeräte 54 modulierten Strom erwidert. Das erste Kommunikationsgerät 52 misst die Spannung an dem Messwiderstand 68, wodurch somit die von einem der zweiten Kommunikationsgeräte 54 modulierten Daten dekodiert werden können.

Die Datenübertragung von dem ersten Kommunikationsgerät 52 zu einem der zweiten Kommunikationsgeräte 54 und von jedem der zweiten Kommunikationsgeräte 54 zu dem ersten Kommunikationsgerät 52 erfolgt jeweils unabhängig und in prinzipiell beliebiger zeitlicher Abfolge. Es ist lediglich zu vermeiden, dass zwei der Kommunikationsgeräte 52, 54 gleichzeitig eine Übertragung von Daten durchführen wollen.

Figur 4 zeigt eine Modulation des Stroms auf dem Kommunikationsbus 56 durch das erste bzw. eines der zweiten Kommunikationsgeräte 52, 54 in Übereinstimmung mit der ersten Ausführungsform. Während einer ersten Übertragungsphase 82 überträgt das erste Kommunikationsgerät 52 Daten, die binäre, digitale Daten mit einem dominanten und einem passiven Pegel sind. Entsprechend wird der Strom auf dem Kommunikationsbus 56 von der ersten Modulationsvorrichtung 72 erhöht, um einen dominanten Pegel zu modulieren. Dadurch wird ein Momentan-Wert der Spannung auf dem Kommunikationsbus 56 auch erhöht, was mit der zweiten Spannungsmessvorrichtung 80 erfasst und dekodiert werden kann. Bei einem passiven Pegel bleibt der Strom auf dem Kommunikationsbus 56 unverändert; die erste Modulationsvorrichtung 72 kodiert den passiven Pegel digital mit Null (0). Bei einem aktiven Pegel wird entsprechend der Strom auf dem Kommunikationsbus 56 verändert; die erste Modulationsvorrichtung 72 kodiert den aktiven Pegel digital mit eins (1).

Entsprechendes gilt für die Modulierung und Übertragung von Daten von einem der zweiten Kommunikationsgeräte 54 zu dem ersten Kommunikationsgerät 52. Während eines der zweiten Kommunikationsgeräte 54 seine Daten mit seiner zweiten Modulationsvorrichtung 78 moduliert, wird der gesamte von der Vorspannungsquelle 64 gezogene Strom erhöht. Aufgrund des in Reihe geschalteten Messwiderstands 68 wird der Momentan-Wert der Spannung auf dem Kommunikationsbus 56 verkleinert.

Figur 5 zeigt eine Modulation des Stroms auf dem Kommunikationsbus 56 durch das erste Kommunikationsgerät 52 gemäß einer zweiten Ausführungsform. Die zu modulierenden Daten können hier drei verschiedene Pegel aufweisen, zwei dominante Pegel und einen passiven Pegel. Entsprechend wird der Strom auf dem Kommunikationsbus 56 von der ersten Modulationsvorrichtung 72 in Übereinstimmung mit dem ersten bzw. zweiten dominanten Pegel erhöht, um die Daten auf dem Kommunikationsbus 56 zu modulieren.

In einer weiteren Ausführungsform können die zusendenden Daten in beiden Richtungen mit mehreren Modulationspegeln einkodiert und nach dem Empfang auf der anderen Seite entsprechend dekodiert werden.

In einer alternativen Ausführungsform ist der Abschlusswiderstand 60 in dem ersten Kommunikationsgerät 52 oder in dem zweiten Kommunikationsgerät 54 angeordnet.

Basierend auf der ausschließlichen Verwendung von Strommodulation zur Übertragung der Daten in dem Netzwerkkommunikationssystem 50 kann die Gestaltung des modulierten Stroms derart angepasst werden, um die Anforderungen an die elektromagnetische Verträglichkeit (EMV) zu erfüllen. Die eigentliche Anpassung der Modulation zur Reduktion von EMV-Abstrahlungen durch das Netzwerkkommunikationssystem 50 liegt nicht im Umfang der Erfindung und wird daher an dieser Stelle nicht erläutert. Es wird vorliegend das Netzwerkkommunikationssystem 50 bereitgestellt, um diese Anpassung der Modulation vornehmen zu können.

### Bezugszeichenliste

- 10: Netzwerkkommunikationssystem (Stand der Technik)
- 12: Master (Stand der Technik)
- 14: Slave (Stand der Technik)
- 16: Kommunikationsbus (Stand der Technik)
- 18: Streukapazität (Stand der Technik)
- 20: modulierbare Spannungsquelle (Stand der Technik)
- 22: Messwiderstand (Stand der Technik)
- 24: erster Spannungsmesser (Stand der Technik)
- 26: Strommessvorrichtung (Stand der Technik)
- 28: zweiter Spannungsmesser (Stand der Technik)
- 30: Strommodulationsvorrichtung, modulierbare Stromsenke (Stand der Technik)

- Iₙ: vom Slave Modulierter Strom (Stand der Technik)
- U_{M}: vom Master Modulierte Spannung (Stand der Technik)

- 50: Netzwerkkommunikationssystem
- 52: erstes Kommunikationsgerät, Master
- 54: zweites Kommunikationsgerät, Slave
- 56: Kommunikationsbus
- 58: Leitung
- 60: Abschlusswiderstand
- 62: Abschlussspannungsquelle, Konstantspannungsquelle
- 64: Vorspannungsquelle, Konstantspannungsquelle
- 66: Strommessvorrichtung
- 68: Messwiderstand
- 69: Stromspiegel
- 70: erste Spannungsmessvorrichtung
- 71: Strommesser
- 72: erste Modulationsvorrichtung, modulierbare Stromquelle
- 74: Versorgungspannungsquelle
- 76: Diode
- 78: zweite Modulationsvorrichtung, modulierbare Stromsenke
- 80: zweite Spannungsmessvorrichtung
- 82: erste Übertragungsphase
- 84: zweite Übertragungsphase

- I_{M}: vom Master Modulierter Strom

## Patentansprüche

1. Netzwerkkommunikationssystem (50) für ein Fahrzeug, das Netzwerkkommunikationssystem umfassend :
einen Kommunikationsbus (56) , ein erstes Kommunikationsgerät (52) und
eine Mehrzahl zweiter Kommunikationsgeräte (54), die über den Kommunikationsbus (56) miteinander verbunden sind, wobei
das erste Kommunikationsgerät (52) eine Vorspannungsquelle (64) umfasst zur Erzeugung einer konstanten Vorspannung auf dem Kommunikationsbus (56),
das erste Kommunikationsgerät (52) eine Strommessvorrichtung (66) zur Erfassung des Stroms auf dem Kommunikationsbus (56) umfasst,
das Netzwerkkommunikationssystem (50) einen Abschlusswiderstand (60) aufweist, der parallel zu der Mehrzahl zweiter Kommunikationsgeräte (54) angeordnet ist,
das erste Kommunikationsgerät (52) eine erste Modulationsvorrichtung (72) zur Modulation eines durch die Vorspannung und den Abschlusswiderstand (60) eingestellten Stroms auf dem Kommunikationsbus (56) umfasst,
jedes zweite Kommunikationsgerät (54) eine zweite Modulationsvorrichtung (78) zur Modulation des durch die Vorspannung und den Abschlusswiderstand (60) eingestellten Stroms umfasst,
jedes zweite Kommunikationsgerät (54) eine zweite Spannungsmessvorrichtung (80) zur Erfassung einer Spannung an dem Abschlusswiderstand (60)
**dadurch gekennzeichnet, dass**
die Vorspannungsquelle (64) und die Strommessvorrichtung (66) in Reihe geschaltet sind,
die Vorspannungsquelle (64) und die erste Modulationsvorrichtung (72) parallel in dem ersten Kommunikationsgerät (52) angeordnet sind, und
der Vorspannungsquelle (64) eine Diode (76) vorgeschaltet ist, die einen Strom aus der ersten Modulationsvorrichtung (72) in die Vorspannungsquelle (64) blockiert.

2. Netzwerkkommunikationssystem (50) nach Anspruch 1, **dadurch gekennzeichnet, dass**
die Strommessvorrichtung (66) einen Messwiderstand (68), durch den der von dem zweiten Kommunikationsgerät (54) modulierte Strom fließt, und eine erste Spannungsmessvorrichtung (70) zur Erfassung eines Spannungsabfalls an dem Messwiderstand (68) aufweist.

3. Netzwerkkommunikationssystem (50) nach Anspruch 1, **dadurch gekennzeichnet, dass**
die Strommessvorrichtung (66) einen Stromspiegel (69), durch den der von dem zweiten Kommunikationsgerät (54) modulierte Strom fließt, und einen Strommesser (71) aufweist.

4. Netzwerkkommunikationssystem (50) nach einem der vorhergehenden Ansprüche, **dadurch gekennzeichnet, dass**
die Vorspannungsquelle (64) als Konstantspannungsquelle ausgeführt ist.

5. Netzwerkkommunikationssystem (50) nach einem der vorhergehenden Ansprüche, **dadurch gekennzeichnet, dass**
die erste Modulationsvorrichtung (72) in Reihe mit einer ersten Spannungsquelle (74) geschaltet ist.

6. Netzwerkkommunikationssystem (50) nach einem der vorhergehenden Ansprüche, **dadurch gekennzeichnet, dass**
die erste Modulationsvorrichtung (72) und/oder die zweite Modulationsvorrichtung (78) zur analogen Modulation des Stroms ausgeführt ist.

7. Netzwerkkommunikationssystem (50) nach einem der vorhergehenden Ansprüche, **dadurch gekennzeichnet, dass**
die erste Modulationsvorrichtung (72) und/oder die zweite Modulationsvorrichtung (78) zur digitalen Modulation des Stroms ausgeführt ist, vorzugsweise mit einer Mehrzahl unterschiedlicher Modulationsstrompegel.

8. Netzwerkkommunikationssystem (50) nach einem der vorhergehenden Ansprüche, **dadurch gekennzeichnet, dass**
der Abschlusswiderstand (60) in dem ersten Kommunikationsgerät (52) angeordnet ist.

9. Netzwerkkommunikationssystem (50) nach einem der vorhergehenden Ansprüche, **dadurch gekennzeichnet, dass**
der Abschlusswiderstand (60) in einem der zweiten Kommunikationsgeräte (54) angeordnet ist.

10. Netzwerkkommunikationssystem (50) nach einem der vorhergehenden Ansprüche, **dadurch gekennzeichnet, dass**
der Abschlusswiderstand (60) direkt an dem Kommunikationsbus (56) angeordnet ist.

11. Netzwerkkommunikationssystem (50) nach einem der vorhergehenden Ansprüche, **dadurch gekennzeichnet, dass**
die zweite Modulationsvorrichtung (78) als modulierbare Stromsenke ausgeführt ist.

12. Verfahren zur bidirektionalen, auf Strommodulation-basierten Kommunikation in einem Netzwerkkommunikationssystem (50) nach einem der Ansprüche 1 bis 11, umfassend die Schritte:
Erzeugen einer konstanten Vorspannung auf dem Kommunikationsbus (56) mit dem ersten Kommunikationsgerät (52),
Erzeugen eines modulierten Stroms auf dem Kommunikationsbus (56) mit dem ersten Kommunikationsgerät (52),
Erfassen der an dem Abschlusswiderstand (60) durch den mit dem ersten Kommunikationsgerät (52) modulierten Strom verursachten Spannung mit jedem der zweiten Kommunikationsgeräte (54),
Erzeugen eines modulierten Stroms auf dem Kommunikationsbus (56) mit einem der zweiten Kommunikationsgeräte (54), und
Erfassen des mit einem der zweiten Kommunikationsgeräte (54) modulierten Stroms auf dem Kommunikationsbus (56) mit dem ersten Kommunikationsgerät (52).

## Claims

1. Network communication system (50) for a vehicle, the network communication system comprising:
a communication bus (56), a first communication device (52) and a plurality of second communication devices (54) which are connected to one another via the communication bus (56), wherein
the first communication device (52) comprises a bias voltage source (64) for generating a constant bias voltage on the communication bus (56),
the first communication device (52) comprises a current measurement apparatus (66) for capturing the current on the communication bus (56),
the network communication system (50) has a terminating resistor (60) which is arranged in parallel with the plurality of second communication devices (54),
the first communication device (52) comprises a first modulation apparatus (72) for modulating a current set by the bias voltage and the terminating resistor (60) on the communication bus (56),
each second communication device (54) comprises a second modulation apparatus (78) for modulating the current set by the bias voltage and the terminating resistor (60),
each second communication device (54) has a second voltage measurement apparatus (80) for capturing a voltage at the terminating resistor (60),
**characterized in that**
the bias voltage source (64) and the current measurement apparatus (66) are connected in series,
the bias voltage source (64) and the first modulation apparatus (72) are arranged in parallel in the first communication device (52), and
a diode (76) is connected upstream of the bias voltage source (64) and blocks a current from the first modulation apparatus (72) into the bias voltage source (64) .

2. Network communication system (50) according to Claim 1, **characterized in that**
the current measurement apparatus (66) has a measurement resistor (68), through which the current modulated by the second communication device (54) flows, and a first voltage measurement apparatus (70) for capturing a voltage drop across the measurement resistor (68).

3. Network communication system (50) according to Claim 1, **characterized in that**
the current measurement apparatus (66) has a current mirror (69), through which the current modulated by the second communication device (54) flows, and an ammeter (71) .

4. Network communication system (50) according to one of the preceding claims, **characterized in that**
the bias voltage source (64) is in the form of a constant voltage source.

5. Network communication system (50) according to one of the preceding claims, **characterized in that**
the first modulation apparatus (72) is connected in series with a first voltage source (74).

6. Network communication system (50) according to one of the preceding claims, **characterized in that**
the first modulation apparatus (72) and/or the second modulation apparatus (78) is/are designed for analogue modulation of the current.

7. Network communication system (50) according to one of the preceding claims, **characterized in that**
the first modulation apparatus (72) and/or the second modulation apparatus (78) is/are designed for digital modulation of the current, preferably with a plurality of different modulation current levels.

8. Network communication system (50) according to one of the preceding claims, **characterized in that**
the terminating resistor (60) is arranged in the first communication device (52).

9. Network communication system (50) according to one of the preceding claims, **characterized in that**
the terminating resistor (60) is arranged in one of the second communication devices (54).

10. Network communication system (50) according to one of the preceding claims, **characterized in that**
the terminating resistor (60) is directly arranged on the communication bus (56).

11. Network communication system (50) according to one of the preceding claims, **characterized in that**
the second modulation apparatus (78) is in the form of a current sink which can be modulated.

12. Method for bidirectional communication based on current modulation in a network communication system (50) according to one of Claims 1 to 11, comprising the steps **of:**
generating a constant bias voltage on the communication bus (56) using the first communication device (52),
generating a modulated current on the communication bus (56) using the first communication device (52),
capturing the voltage caused by the current modulated using the first communication device (52) at the terminating resistor (60) using each of the second communication devices (54),
generating a modulated current on the communication bus (56) using one of the second communication devices (54), and
capturing the current modulated using one of the second communication devices (54) on the communication bus (56) using the first communication device (52).

## Revendications

1. Système de communication de réseau (50) pour un véhicule, le système de communication de réseau comprenant :
un bus de communication (56), un premier appareil de communication (52) et une pluralité de deuxièmes appareils de communication (54), qui sont reliés les uns aux autres par l'intermédiaire du bus de communication (56), dans lequel
le premier appareil de communication (52) comprend une source de tension de polarisation (64) servant à générer une tension de polarisation constante sur le bus de communication (56),
le premier appareil de communication (52) comprend un dispositif de mesure de courant (66) servant à détecter le courant sur le bus de communication (56),
le système de communication de réseau (50) comporte une résistance de terminaison (60), qui est disposée de manière parallèle par rapport à la pluralité de deuxièmes appareils de communication (54),
le premier appareil de communication (52) comprend un premier dispositif de modulation (72) servant à la modulation d'un courant réglé par la tension de polarisation et la résistance de terminaison (60) sur le bus de communication (56),
chaque deuxième appareil de communication (54) comprend un deuxième dispositif de modulation (78) servant à la modulation du courant réglé par la tension de polarisation et la résistance de terminaison (60),
chaque deuxième appareil de communication (54) comporte un deuxième dispositif de mesure de tension (80) servant à détecter une tension sur la résistance de terminaison (60),
**caractérisé en ce que**
la source de tension de polarisation (64) et le dispositif de mesure de courant (66) sont connectés en série,
la source de tension de polarisation (64) et le premier dispositif de modulation (72) sont agencés en parallèle dans le premier appareil de communication (52), et
en amont de la source de tension de polarisation (64) est connectée une diode (76) qui bloque un courant du premier dispositif de modulation (72) vers la source de tension de polarisation (64).

2. Système de communication de réseau (50) selon la revendication 1, **caractérisé en ce que**
le dispositif de mesure de courant (66) comporte une résistance de mesure (68) à travers laquelle passe le courant modulé par le deuxième appareil de communication (54), et un premier dispositif de mesure de tension (70) servant à détecter une chute de tension sur la résistance de mesure (68).

3. Système de communication de réseau (50) selon la revendication 1, **caractérisé en ce que**
le dispositif de mesure de courant (66) comporte un miroir de courant (69) à travers lequel passe le courant modulé par le deuxième appareil de communication (54), et un ampèremètre (71).

4. Système de communication de réseau (50) selon l'une des revendications précédentes, **caractérisé en ce que**
la source de tension de polarisation (64) est réalisée sous forme de source de tension constante.

5. Système de communication de réseau (50) selon l'une des revendications précédentes, **caractérisé en ce que**
le premier dispositif de modulation (72) est connecté en série à une première source de tension (74).

6. Système de communication de réseau (50) selon l'une des revendications précédentes, **caractérisé en ce que**
le premier dispositif de modulation (72) et/ou le deuxième dispositif de modulation (78) est/sont conçu(s) pour une modulation analogique du courant.

7. Système de communication de réseau (50) selon l'une des revendications précédentes, **caractérisé en ce que**
le premier dispositif de modulation (72) et/ou le deuxième dispositif de modulation (78) est/sont conçu(s) pour une modulation numérique du courant, de préférence avec une pluralité de niveaux de courant de modulation différents.

8. Système de communication de réseau (50) selon l'une des revendications précédentes, **caractérisé en ce que**
la résistance de terminaison (60) est agencée dans le premier appareil de communication (52).

9. Système de communication de réseau (50) selon l'une des revendications précédentes, **caractérisé en ce que**
la résistance de terminaison (60) est agencée dans l'un des deuxièmes appareils de communication (54).

10. Système de communication de réseau (50) selon l'une des revendications précédentes, **caractérisé en ce que**
la résistance de terminaison (60) est agencée directement sur le bus de communication (56).

11. Système de communication de réseau (50) selon l'une des revendications précédentes, **caractérisé en ce que**
le deuxième dispositif de modulation (78) est réalisé sous forme de puits de courant modulable.

12. Procédé pour une communication bidirectionnelle basée sur une modulation de courant dans un système de communication de réseau (50) selon l'une des revendications 1 à 11, comprenant les étapes consistant à :
générer une tension de polarisation constante sur le bus de communication (56) au moyen du premier appareil de communication (52),
générer un courant modulé sur le bus de communication (56) au moyen du premier appareil de communication (52), détecter la tension provoquée par le courant modulé par le premier appareil de communication (52) sur la résistance de terminaison (60) au moyen de chacun des deuxièmes appareils de communication (54),
générer un courant modulé sur le bus de communication (56) au moyen de l'un des deuxièmes appareils de communication (54), et
détecter au moyen du premier appareil de communication (52) le courant modulé au moyen de l'un des deuxièmes appareils de communication (54) sur le bus de communication (56).
